# EUROPEAN PATENT APPLICATION

(11) **EP 1 603 063 A1**
(43) Date of publication of application: **07.12.2005**
(21) Application number: 04291349.1
(22) Date of filing: 28.05.2004
(51) Int. Cl.: G06F 17/60

(54) **Digital photo order processing system**

(71) Applicant: FUJI PHOTO FILM CO., LTD., Kanagawa-ken (JP)
(72) Inventor: Tsue, Takashi c/o Fuji Photo Film Co., Ltd, Ashigara-kami-gun, Kanagawa (JP)
(74) Representative: Thévenet, Jean-Bruno

(57) **Abstract**

In a digital photo order processing system including a first transfer device, a second transfer device and a photo processing laboratory 14, order information of a customer is preferentially transferred by the first transfer device 24a to the photo processing laboratory 14 prior to transfer of at least one order image, at least one order image corresponding to the order information is transferred by the second transfer device 24b to the photo processing laboratory 14 after the transfer of the order information, and at the photo processing laboratory 14, a production plan 28 of photo print processing is prepared based on the order information transferred by the first transfer device 24a and at least one photo print of at least one order image transferred by the second transfer device 24b is created in accordance with the prepared production plan.

## Description

### BACKGROUND OF THE INVENTION

### 1. Field of the Invention

The present invention relates to a digital photo order processing system, and more specifically to a digital photo order processing system where a production plan for processing customers' orders with efficiency is made and the customers' orders are processed to produce photo prints in accordance with the production plan at a photo processing laboratory.

### 2. Description of the Related Art

Nowadays, it is possible to acquire a digital image by photographing a subject using a digital still camera (DSC), a digital video camera, or a camera-equipped mobile telephone (hereinafter, the digital still camera and the digital video camera will be collectively referred to as the "digital camera") and to appreciate, edit, and process the digital image obtained in this manner, a distributed digital image, a broadcasted digital image, a digitized image (recorded in a digital image recording medium such as a CD) of an image photographed on a photographic film such as a negative film or a reversal film, or the like by displaying the digital image on a personal computer (PC), a digital television set, or the like. Consequently, there are rapidly increasing opportunities to deal with such digital images (digital image data).

On the other hand, in recent years, a digital photo printer has come into wide spread use which prints a digital image on printing paper (photographic paper) by reading an image photographed on a photographic film as digital image data using a scanner or the like or reads out digital image data from a digital device (such as a digital camera or a camera-equipped mobile telephone) or a digital image recording medium and exposing the paper with a recording beam (such as laser light) modulated in accordance with the digital image data. This digital photo printer is multifunctional, is capable of performing input and output in a wide variety of methods, and is capable of performing various image processing.

For instance, it is possible to deal with, as an input source, a photographic film such as a negative film or a reversal film, digital image data (image file) photographed with a digital camera, a camera-equipped mobile telephone, or the like and recorded in the main body of the camera or a digital image recording medium (storage medium), such as a SmartMedia™, a Memory Stick™, or an SD card™, digital image data (image file) recorded in a digital image recording medium (storage medium), such as a flexible disk (FD), a CD-R, or a Photo CD™, digital image data directly transmitted from a customer's PC, a user's PC, or the like through a communication means such as the Internet, or the like.

Similarly, aside from ordinary printing paper (photographic paper), it is possible to use various output forms such as a post card, a digital image recording medium (hereinafter simply referred to as the "medium") like a CD-R storing digital image data subjected to image processing, and direct distribution of digital image data subjected to image processing to a customer's PC, a user's PC, or the like through a communication means such as the Internet.

Consequently, a method or form for placing a photo print order with a photo processing laboratory equipped with a digital photo printer and a method of receiving an ordered photo print (that is, a handover method or form) are also diversified.

As an example of the ordering method, there is known a method with which a customer orders a digital photo print by bringing a photographic film to the counter of an agency or a photo processing laboratory and writing customer's order information onto an envelope for development and printing (so-called DP envelope). Then, the DP envelope containing the photographic film is transferred to a photo processing laboratory. At the photo processing laboratory, the photographic film is read and is converted into digital image data using a scanner of a digital photo printer. In addition, the customer's order information written on the DP envelope is inputted and is related to the customer's digital image.

Aside from this method, there are various methods for ordering a digital photo print directly using a digital image.

For instance, there is known a method with which first, a customer reads out digital images (image files) from a medium, a digital camera, or a camera-equipped mobile telephone storing the digital images using his/her PC or the like, displays the read-out images on a display device, selects an order image whose photo print is to be ordered, from among the displayed images, and inputs order information so as to be related to the selected order image. Then, communication data is generated by integrating the order image with its corresponding order information and is transferred from the customer's PC or the like to a reception server or the like (digital photo printer) at a photo processing laboratory directly or via an ordering center using a communication system, that is, through a shared communication network like the Internet, a dedicated communication line network like a LAN, or the like (see JP 2003-203170 A).

It should be noted here that when the customer's order image and its corresponding order information are integrally transmitted as the communication data using the communication system, the image data of the order image has a large size in comparison with the order information. Conventionally, in order to realize a more safe and reliable ordering system where consideration is given to problems such as a communication error, the image data is first transmitted and, after it is confirmed that the image data has been normally transmitted, the order information is subsequently transmitted.

Also, there is known a method with which first, a customer brings a medium, a digital camera, or a camera-equipped mobile telephone storing digital images to the counter of an agency or a photo processing laboratory and an operator or the customer himself/herself reads out the digital images from the medium, the digital camera, or the camera-equipped mobile telephone, displays the read-out images on a display device of a counter terminal machine such as a counter reception machine or an automatic reception machine, selects a customer's order image from among the displayed images, and inputs order information so as to be related to the customer's order image. Then, communication data is generated by integrating the customer's order image with its corresponding order information and is transferred from the counter terminal machine to a reception server or the like (digital photo printer) at the photo processing laboratory directly or via an ordering center using a communication system, that is, through a shared communication network like the Internet, a dedicated communication line network like as a LAN, or the like.

Further, there is a method with which a customer's order image read out from a medium and its corresponding order information inputted are integrally recorded in an ordering medium using a counter terminal machine or the like at an agency, this medium is put in a DP envelope, the DP envelope is transferred from the agency to a photo processing laboratory by a delivery means, such as a delivery car like a truck, directly or via an ordering center, and the customer's order image and the corresponding order information recorded in the ordering medium are read out by a digital photo printer.

Digital photo print ordering using a digital image is performed in the manner described above. At the photo processing laboratory, each time a digital photo print order is received, after several orders are received, or when the current time has reached a predetermined time, the order information of respective orders is summarized, the orders are grouped into lots (production plan on a lot-by-lot basis is made) according to a result of the summarization, and a digital photo printer is caused to operate (to perform lot-by-lot production), thereby producing and outputting each ordered digital photo print. For instance, the print sizes and the numbers of copies (numbers of prints) to be made are summarized with respect to respective paper widths of printing paper (roll paper) used by the digital photo printer and the lot grouping is performed with consideration given to the paper width and remaining amount of the printing paper in a magazine currently loaded into the digital photo printer. In more detail, the lot grouping is performed so that switching among magazines containing printing paper having different paper widths and remaining amounts is performed. On the other hand, when multiple digital photo printers are used, the lot grouping is performed so that these digital photo printers are allocated to the lots.

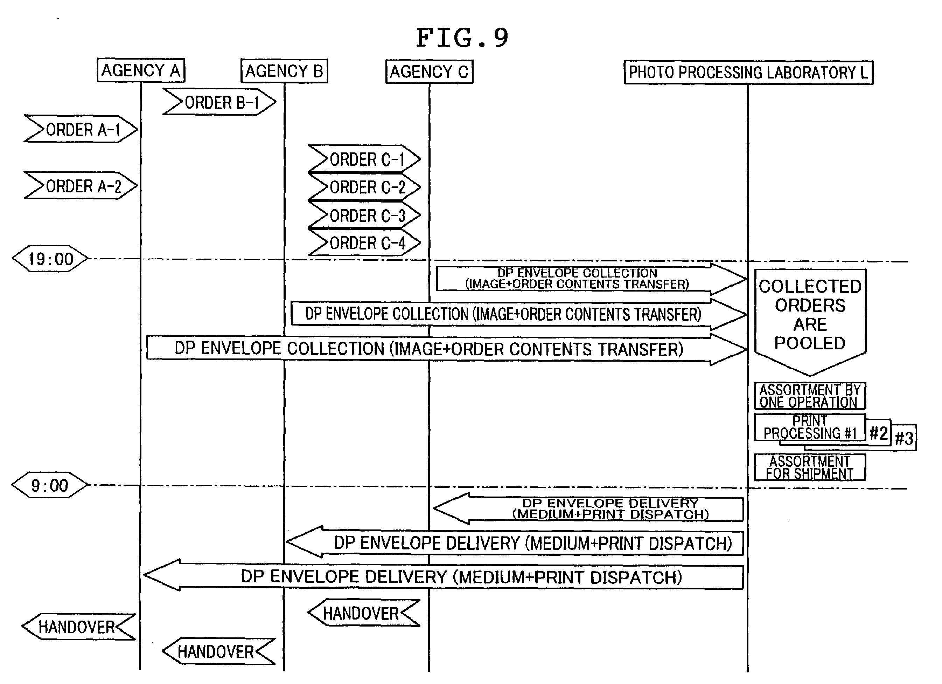

FIG. 9 is a flowchart showing a workflow of a conventional digital photo order processing system where digital photo print orders are placed using counter reception machines.

In this drawing, it is assumed that until 19 o'clock on a certain date, an order A-1 and an order A-2 were received at an agency A, an order B-1 was received at an agency B, and an order C-1, an order C-2, an order C-3, and an order C-4 were received at an agency C using order reception machines installed at these agencies.

At the agencies A, B, and C, media storing order images corresponding to these orders and order information showing the contents of the orders are created and are contained in DP envelopes on which required order information has been written. Then, the DP envelopes are stored until a collection service (collection car) arrives at the agencies.

Following this, the collection service (collection car) collects the media-containing DP envelopes from the respective agencies periodically (after 19 o'clock, in the illustrated example) and transports them to a photo processing laboratory L. Note that this collection service needs to make the rounds of the agencies once per day in the evening or the like regardless of whether the agencies have received any orders.

Next, at the photo processing laboratory L, after receiving the collected DP envelopes, the media are taken out from the DP envelopes, the order images and their corresponding order information are read out from the media, and the read-out orders are pooled. After all orders are pooled, the orders are assorted (grouped into lots) by one operation. Basically, this conventional assortment is mechanically performed without giving consideration to the efficient use of labor and the efficient operations of print facilities, such as a digital photo printer, and there are many photo processing laboratories where this assortment is performed using human-wave tactics based on visual judgment. Note that the print facilities are placed under a nonoperating status until this assortment is finished.

Next, at the photo processing laboratory L, desired photo prints are produced by processing the orders assorted into the lots (for instance, performing print processing #1, #2, and #3) using the digital photo printer. At this time, the print facilities (digital photo printer) and labor are allocated with consideration given to the production capacity at a peak time and intensive production is performed. Therefore, except for the peak time, the print facilities and labor become excess and there exit unused facilities and labor. Also, the control of the print facilities, such as the sequence of print processing and the switching timings of the paper width of the printing paper (photographic paper), are left to a judgment made by each operator, which results in a situation where no consideration is given to the overall efficiency.

After print processing is performed at the photo processing laboratory L, each print result (photo print) and each used medium are put into a corresponding DP envelope and assortment for shipment to the agencies A, B, and C is performed.

After the shipment assortment is performed in this manner, the DP envelopes containing the photo prints and the media are delivered (dispatched) to the agencies A, B, and C by the collection service (collection car) periodically (after 9 o'clock, in the illustrated example). In this manner, the DP envelopes are returned to the agencies A, B, and C.

Finally, at the agencies A, B, and C, the DP envelopes containing the photo prints and the media are handed to customers in exchange for payment.

The print orders are processed in this manner, thereby raising the following problem. That is, although it is possible to cause each digital photo printer to operate with a relatively high degree of efficiency on a lot-by-lot basis, when consideration is made in a long term such as one day (one week, in some cases), a digital photo printer loaded with printing paper having a specific paper width among multiple digital photo printers is intensively used or the printers are intensively used in a specific time slot. Consequently, a situation occurs in which a time period in which some digital photo printers are placed under a nonoperating status is elongated. Also, when a single digital photo printer is used, the number of times of magazine switching is increased. This magazine switching is performed while stopping the printer and takes a relatively long time, so that a problem occurs in that a time period during which the digital photo printer does not operate is elongated.

Also, according to the digital photo print ordering method using a digital image, with which the digital image is transferred from a PC or the like of a customer himself/herself, a counter terminal machine, or the like to a photo processing laboratory using a communication system like in the case of JP 2003-203170 A or the digital image is transferred from an agency or the like to the photo processing laboratory using an ordering medium, the order is an integration of a customer's order image and its corresponding order information. Consequently, it is required to read respective customer's order images of respective received orders and their corresponding order information at the photo processing laboratory. Also, unless the reading of the respective order images of the respective orders and the reading of their corresponding order information are both finished, the numbers of copies to be made, the paper widths to be used, and the like concerning all received orders cannot be grasped. Therefore, a problem occurs in that it is impossible to make a plan in advance and to perform efficient production of photo prints.

Also, it is impossible to predict the arrival time of each order at the photo processing laboratory, so that a problem occurs in that it is difficult to give a timely warning about a trouble (such as the erroneous delivery, delivery delay, or loss of a DP envelope containing an ordering medium or the like or the erroneous transfer, transfer delay, or loss of an order) and to take swift measures against the trouble. Conventionally, such a trouble or abnormality is found or detected when an inquiry is received from a customer in the majority of cases. In a system where orders are received through order transfer (collection) using DP envelopes, for instance, only orders collected and delivered to a photo processing laboratory are processed, so that when a DP envelope does not arrive at the photo processing laboratory for any reasons (for instance, when an agency forgot to hand the DP envelope to a collection service or when the DP envelope is lost during the collection), there arises a problem that such a problematic situation is not detected until a complaint is received from a user. Similarly, in a system where orders are received through transfer using a communication means, only orders transferred to a photo processing laboratory system are processed, so that when order information and its corresponding order image do not arrive at the photo processing laboratory due to any reasons (for instance, data loss resulting from a server malfunction or a communication trouble), there arises a problem that this problematic situation is not detected until a complaint is received from a user.

Further, in an online order reception system, the same problem occurs as in the above cases because a long time is taken to transfer placed orders (order images+order information) to a photo processing laboratory due to a surge in demand for so-called network print ordering where digital photo print orders are placed through the Internet using a broadband environment, concentrated order placement on a specific day of week and in a specific time slot, an increase in image file size resulting from an increase in number of pixels of digital cameras and camera-equipped mobile telephones, and the like. In more detail, for the sake of cost reduction, the capacity of a line between a reception center and a photo processing laboratory (system) is reduced in comparison with that of a line between a customer's terminal or a counter reception machine and the reception center, so that orders (print orders) intensively placed from the counter reception machine at weekend night and in the evening on several days at the beginning of next week need to wait to be transferred for several hours or longer. Consequently, a problem occurs in that it is impossible to deliver customer's order information and order images to the photo processing laboratory.

### SUMMARY OF THE INVENTION

The present invention has been made in order to solve the problems with the conventional techniques as described above, and has a primary object to provide a digital photo order processing system that is capable of making a production plan, in accordance with which customers' orders are to be processed with efficiency, and producing photo prints ordered by the customers with efficiency in accordance with the production plan at a photo processing laboratory.

It is a secondary object of the present invention to provide a digital photo order processing system that is capable of giving a timely warning about a trouble over an order and taking swift measures against the trouble at a photo processing laboratory.

In order to attain the primary and secondary objects described above, the first aspect of the present invention provides a digital photo order processing system in which a photo processing laboratory receives at least one order image and order information of a customer having been related to each other and creates at least one photo print of the at least one order image in accordance with the order information, comprising: first transfer means; and second transfer means, wherein: the order information of the customer is preferentially by the first transfer means to the photo processing laboratory prior to transfer of the at least one order image; the at least one order image corresponding to the order information is transferred by the second transfer means to the photo processing laboratory after the transfer of the order information is finished; and at the photo processing laboratory, a production plan of photo print processing is prepared based on the order information transferred by the first transfer means and the at least one photo print of the at least one order image transferred by the second transfer means is created in accordance with the prepared production plan.

Preferably, before the order information of the customer is transferred by the first transfer means, the order information of the customer is inputted; and before the transfer of the at least one order image of the customer by the second transfer means, the at least one order image of the customer is inputted.

And, preferably, before the at least one photo print of the at least one order image is created in accordance with the production plan, it is confirmed whether the at least one order image of the customer corresponding to the preferentially transferred order information has been transferred to the photo processing laboratory; and if the at least one order image is not yet transferred, it is waited for the at least one order image to be transferred and, after it is confirmed that the at least one order image has been transferred, the at least one photo print of the at least one order image is created.

Further, preferably, at the photo processing laboratory, after the at least one photo print of the at least one order image is created, the at least one created photo print is handed over to the customer or a person designated by the customer.

Moreover, preferably, the order information contains at least orderer's information, an order date and time or a delivery date and time, a print size, a number of prints to be made, a finishing type, a type of photo product and a print reception method, and further contains an attribute (e.g., file format, size, various kinds of information at the time of photographing and reduced image) of the at least one order image as optional information.

Preferably, when plural orders have been received and order information of a succeeding order is inputted during transfer of at least one order image of a preceding order by the second transfer means, the first transfer means allows the second transfer means to suspend temporarily the transfer of the at least one order image of the preceding order through an interruption and preferentially transfers the order information of the succeeding order to the photo processing laboratory.
the transfer of the order information of the succeeding order is finished,

And preferably, during transfer of the order information of the succeeding order by the first transfer means through the interruption, the first transfer means allows the second transfer means to interrupt temporarily the transfer of the at least one order image of the preceding order and the second transfer means that temporarily interrupts the transfer resumes the transfer of the at least one order image of the preceding order after the transfer of the order information of the succeeding order by the first transfer means is finished, or preferably, during the transfer of the order information of the succeeding order by the first transfer means through the interruption, the second transfer means transfers the at least one order image of the preceding order in parallel or by background processing.

In other words, preferably, when plural orders have been received and order information of a succeeding order is inputted during transfer of at least one order image of a preceding order by the second transfer means, the first transfer means allows the second transfer means to interrupt temporarily the transfer of the at least one order image of the preceding order and preferentially transfers the order information of the succeeding order to the photo processing laboratory, and then, the second transfer means resumes the temporarily interrupted transfer of the at least one order image of the preceding order after the transfer of the order information of the succeeding order is finished.

Alternatively, when it is possible to transfer the at least one order image of the preceding order by the second transfer means in parallel during the transfer of the order information of the succeeding order by the first transfer means through the interruption, the second transfer means may transfer the at least one order image of the preceding order in parallel, without interrupting the transfer of the at least one order image of the preceding order by the second transfer means.

Preferably, the first transfer means and the second transfer means respectively transmit the order information and the at least one order image of the customer to the photo processing laboratory as digital data.

And, preferably, the first transfer means transmits the order information of the customer to the photo processing laboratory as digital data; and the second transfer means delivers a digital image recording medium in which the at least one order image of the customer has been recorded to the photo processing laboratory.

Further, preferably, the first transfer means and the second transfer means deliver a digital image recording medium in which both of the order information and the at least one order image of the customer have been recorded, or digital image recording media in each of which one of the order information and the at least one order image has been recorded, to the photo processing laboratory.

Moreover, in order to attain the primary and secondary objects described above, the second aspect of the present invention provides a digital photo order processing system, comprising: means for inputting at least one order image and order information of a customer ordering at least one photo print, wherein the at least one order image and the order information are related to each other; first transfer means for preferentially transferring the inputted order information of the customer to a photo processing laboratory prior to transfer of the at least one order image corresponding to the order information; second transfer means for, after the transfer of the order information of the customer is finished, transferring the at least one order image of the customer corresponding to the order information to the photo processing laboratory; planning means which is provided for the photo processing laboratory and which makes an efficient production plan of photo print processing with reference to the order information transferred by the first transfer means; and photo print processing means which is provided for the photo processing laboratory and which performs the photo print processing of the order image corresponding to the order information of the customer and transferred by the second transfer means in accordance with the production plan to create at least one photo print of the at least one order image of the customer.

It is preferable that the digital photo order processing system further comprises image detection means which is provided for the photo processing laboratory and which confirms whether the at least one order image corresponding to the order information with reference to which the production plan has been made, has arrived at the photo processing laboratory, waits for the at least one order image if the at least one order image does not yet arrive at the photo processing laboratory, and detects the at least one order image of the customer that has arrived at the photo processing laboratory, wherein the photo print processing means performs the photo print processing of the at least one order image of the customer detected by the image detection means in accordance with the production plan.

It is also preferable that the digital photo order processing system further comprises handover means which is provided for the photo processing laboratory and which hands over the at least one photo print of the at least one order image of the customer created by the photo print processing means to the customer or a person designated by the customer.

And, preferably, the handover means is one of delivery means for delivering the at least one photo print to the customer or the person designated by the customer and delivery means for handing the at least one photo print to the customer or the person designated by the customer at a counter of the photo processing laboratory.

Further, preferably, the order information contains at least orderer's information, an order date and time or a delivery date and time, a print size, a number of prints to be made, a finishing type, a type of print product and a print reception method, and further contains an attribute (e.g., file format, size, various kinds of information at the time of photographing and reduced image) of the at least one order image as optional information.

Preferably, when plural orders have been received and order information of a succeeding order is inputted during transfer of at least one order image of a preceding order by the second transfer means, the first transfer means allows the second transfer means to suspend temporarily the transfer of the at least one order image of the preceding order through an interruption and preferentially transfers the order information of the succeeding order to the photo processing laboratory.

And preferably, during transfer of the order information of the succeeding order by the first transfer means through the interruption, the first transfer means allows the second transfer means to interrupt temporarily the transfer of the at least one order image of the preceding order and the second transfer means that temporarily interrupts the transfer resumes the transfer of the at least one order image of the preceding order after the transfer of the order information of the succeeding order by the first transfer means is finished, or preferably, during the transfer of the order information of the succeeding order by the first transfer means through the interruption, the second transfer means transfers the at least one order image of the preceding order in parallel or by background processing.

In other words, preferably, when plural orders have been received and order information of a succeeding order is inputted during transfer of at least one order image of a preceding order by the second transfer means, the first transfer means allows the second transfer means to interrupt temporarily the transfer of the at least one order image of the preceding order and preferentially transfers the order information of the succeeding order to the photo processing laboratory, and then, the second transfer means resumes the temporarily interrupted transfer of the at least one order image of the preceding order after the transfer of the order information of the succeeding order is finished.

Alternatively, when it is possible to transfer the at least one order image of the preceding order by the second transfer means in parallel during the transfer of the order information of the succeeding order by the first transfer means through the interruption, the second transfer means may transfer the at least one order image of the preceding order in parallel, without interrupting the transfer of the at least one order image of the preceding order by the second transfer means.

Preferably, each of the first transfer means and the second transfer means comprises communication means for respectively transmitting the order information and the at least one order image of the customer to the photo processing laboratory as digital data.

And, preferably, the first transfer means comprises communication means for transmitting the order information of the customer to the photo processing laboratory as digital data; and the second transfer means comprises delivery means for delivering a digital image recording medium in which the at least one order image of the customer has been recorded to the photo processing laboratory.

Further, preferably, each of the first transfer means and the second transfer means comprises delivery means for delivering a digital image recording medium in which both of the order information and the at least one order image of the customer have been recorded, or digital image recording media in each of which one of the order information and the at least one order image has been recorded, to the photo processing laboratory.

### BRIEF DESCRIPTION OF THE DRAWINGS

In the accompanying drawings:
FIG. 1 is a schematic block diagram showing the outline of an embodiment of a digital photo order processing system according to the present invention;
FIG. 2 is a schematic diagram showing an example of the digital photo order processing system according to the present invention and an operation thereof;
FIG. 3 is a flowchart showing an exemplary processing flow in the example shown in FIG. 2;
FIG. 4 is a schematic diagram where the example shown in FIG. 2 and a conventional example are compared with each other based on an exemplary print production process in a network ordering system;
FIG. 5 is a schematic diagram showing another example of the digital photo order processing system according to the present invention and an operation thereof;
FIG. 6 is a flowchart showing an exemplary workflow in the example shown in FIG. 5;
FIG. 7 is a block diagram showing another embodiment of the digital photo order processing system according to the present invention;
FIG. 8 is a block diagram showing still another embodiment of the digital photo order processing system according to the present invention; and
FIG. 9 is a flowchart showing an example of a workflow in a conventional case.

### DETAILED DESCRIPTION OF THE PREFERRED EMBODIMENTS

A digital photo order processing system according to the present invention will now be described in detail based on preferred embodiments illustrated in the accompanying drawings.

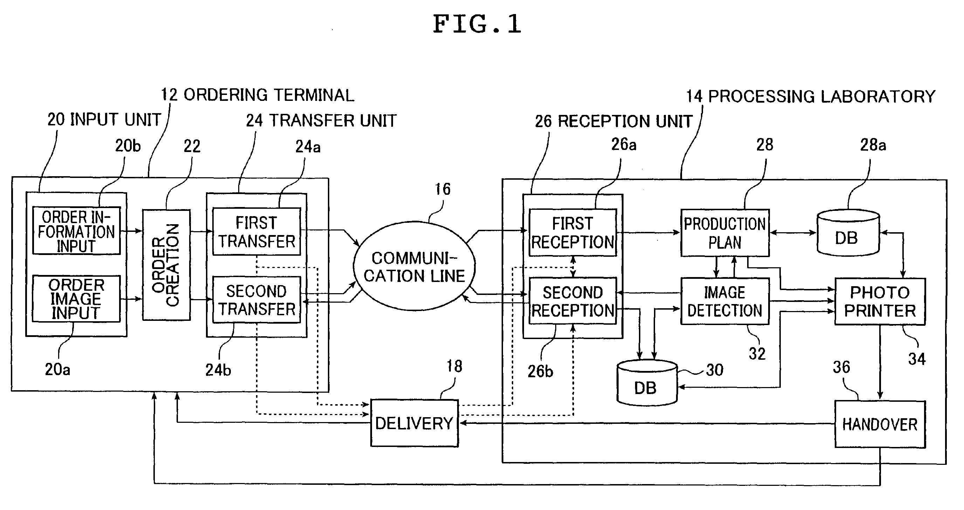

FIG. 1 is a schematic block diagram showing the outline of an embodiment of the digital photo order processing system according to the present invention.

A digital photo order processing system (hereinafter referred to as the "order processing system") 10 shown in this drawing includes an ordering terminal 12 that receives a digital image print order from a customer, a photo processing laboratory (hereinafter referred to as the "photo laboratory") 14 that receives the customer's order and creates a photo print using a customer's digital order image, a communication means (communication line) 16, such as the Internet or a LAN, used to transfer the customer's order (order data) containing the digital order image from the ordering terminal 12 to the photo laboratory 14, and a delivery means 18 for delivering the created photo print from the photo laboratory 14 to the ordering terminal 12 side.

The ordering terminal 12 includes an input unit 20 having an image input section 20a for inputting an image file (digital image data) of a customer's order image and an information input section 20b for inputting customer's order information, an order creation unit 22 for creating a customer's order (order data) by relating (linking) the customer's order image to the customer's order information, and a transfer unit 24 having a first transfer section 24a for preferentially transferring only the order information of the customer's order prior to the customer's order image using the communication means and a second transfer section 24b for transferring the order image of the customer's order at an appropriate timing after the transfer of the customer's order information is finished.

Here, when the customer himself/herself reads out image files (digital image data) from the main body of a digital camera or a camera-equipped mobile telephone (hereinafter collectively referred to as the "digital camera") or a medium, selects an order image whose photo print is to be ordered, inputs order information, creates order data, and transfers the order data to the photo laboratory 14, the ordering terminal 12 may be a customer's terminal such as a PC or a server possessed by the customer himself/herself. When the communication function of a digital camera possessed by the customer is available, the digital camera itself may be a customer's terminal.
Further, a digital camera-equipped mobile telephone possessed by the customer may be a customer's terminal. Also, when the customer brings the digital camera main body, the medium, or the like to the counter of an agency or the photo laboratory 14 and creates order data, the ordering terminal 12 may be an automatic reception machine installed at the counter. Further, when the customer's order data is created by an operator at the agency or the photo laboratory 14, the ordering terminal 12 may be a counter reception machine or a business-use terminal. Note that when the customer brings the digital camera main body, the medium, or the like to the counter of the agency or the photo laboratory 14, images are read out from the digital camera main body, the medium, or the like, a customer's order image is selected, its order information is inputted, and customer's order data is created and transferred to the photo laboratory 14 by the operator using the counter reception machine or by the customer himself/herself using the automatic reception machine at the counter.

By the way, when the ordering terminal 12 is the counter reception machine, the business-use terminal, or the automatic reception machine at the photo laboratory 14, it is preferable that the communication means 16 is a dedicated line such as a LAN.

The image input section 20a of the input unit 20 is used to read out image files containing digital image data from the digital camera main body, the camera-equipped mobile telephone main body, a digital image recording medium (hereinafter simply referred to as the "medium") such as a SmartMedia™, a Memory Stick™, or an SD card™ used for digital cameras or camera-equipped mobile telephones (hereinafter collectively referred to as the "digital cameras"), a medium such as a CD-R or a Photo CD, or the like, and to input the read-out image files into the order creation unit 22. To do so, the image input section 20a includes an input port for reading out the image files from the digital camera main body or the camera-equipped mobile telephone main body and a media drive for reading out the image files from the medium loaded into a slot provided in the ordering terminal 12.

The information input section 20b of the input unit 20 is used to input order information necessary to order a digital photo print of the customer's order image and is, for instance, composed of an operation system such as a keyboard or a mouse. With the information input section 20b, at least orderer's information, an order date and time and/or a delivery date and time, a print size, the number of prints to be made, a finishing type (such as glossy, frosted, or mat), a type of photo product (a type of photographic print product such as a normal print, a frame print, a seal print an album print or a photo gift (e.g., a photo calendar, a printed T-shirt, a printed mug or a printed mouse pad)) and a print reception method are inputted as the order information. It is preferable that the attribute data of the customer's order image (e.g., file format, size, various kinds of information at the time of photographing and reduced image) is also inputted as optional information.

Here, when the ordering terminal 12 is the customer's terminal or the automatic reception machine at the agency or the photo laboratory 14, the orderer's information includes customer's information such as a customer's name, a customer's address, and customer's identification information (customer's (member's) ID, for instance) if it is given from the photo laboratory 14 or the like. On the other hand, when the ordering terminal 12 is the counter reception machine, the business-use terminal, or the automatic reception machine at the agency or the photo laboratory 14, the orderer's information includes orderer's identification information (orderer's ID), a shop name, and an address of the agency or the photo laboratory 14. In this case, however, the orderer's information may include identification information (ordering terminal's ID) of the counter reception machine, the business-use terminal, or the automatic reception machine and the name and address of a shop at which the machine or terminal is installed. In this case, the order information may include the customer's information (customer's ID, name, and address) in addition to the orderer's information.

As a method with which the customer receives the print, that is, a method of handing over the print to the customer, it is possible to use various methods such as a method with which the photo print outputted at the photo laboratory 14 is directly mailed or delivered from the photo laboratory 14 to the customer, a method with which the outputted photo print is delivered from the photo laboratory 14 to the agency and is further mailed or delivered from the agency to the customer, and a method with which the photo print is handed to the customer visiting the counter of the agency or the photo laboratory 14. The photo print may be mailed or delivered not to the customer but to a person or destination designated by the customer. Alternatively, the photo print may be directly handed to a person designated by the customer. When the photo print should be delivered from the photo laboratory 14 to the agency, it is preferable that information showing that effect is contained in the order information as designation of a delivery method by the orderer.

Also, as the attribute of the order image, a reduced image such as a thumbnail image, an image file format/size, various kinds of information at the time of photographing, and the like of the order image are contained in the customer's order information.

The order creation unit 22 creates the customer's order data containing the order image and its order information by relating (linking) the customer's order image inputted from the image input section 20a of the input unit 20 to the customer's order information inputted from the information input section 20b. In the order data used in the present invention, each order image is given order identification information (hereinafter referred to as the "order ID") for identifying its related or corresponding order information and the order information is given the same order ID for identifying its related or corresponding order image. With this construction, even if the order image and the order information are dealt with as separated files, it is possible to connect them as single order data through search using this order ID. Note that when multiple order images are contained in a single order, it is preferable that the order images and their order information are each given image IDs for identifying the respective order images in addition to the order ID described above.

In the present invention, a link means for relating the order image and its corresponding order information to each other is not specifically limited. For instance, it is possible to use a system where the order image and the order information are linked with each other by assigning a unique ID, such as an order (print order) number, to each of their file names. Alternatively, when the order image and the order information are stored in different media, for instance, it is possible to use a system where the link is established by assigning a unique ID, such as an order number, to medium identification information (or a medium identification file), such as a volume label, of each medium.

It should be noted here that in a system where the ordering is performed using a Web ordering screen and application software to be described later, when order data is created by displaying customer's digital images inputted by the image input section 20a for browsing, selecting an order image, correctively or individually inputting order information from the information input section 20b for the selected order image, and automatically relating the customer's order image and the order information to each other, it is not required to especially provide the order creation unit 22.

The transfer unit 24 separates the customer's order image and the order information, which have been related to each other as single order data (digital data) by the order creation unit 22, from each other and transfers (that is, transmits) them using a communication system through the communication means 16. In more detail, the first transfer section 24a preferentially transfers the customer's order information prior to its corresponding customer's order image and the second transfer section 24b transfers the customer's order image through the communication means 16 after the preferential transfer of the customer's order information by the first transfer section 24a is finished. Here, the customer's order information transfer by the first transfer section 24a may be performed for each order, that is, each time a customer's order image and its order information are related to each other as single order data by the order creation unit 22. Alternatively, multiple pieces of order information may be collectively transferred at certain intervals. Note that the details of the preferential transfer of the customer's order information by the first transfer section 24a of the transfer unit 24 and the transfer of the customer's order image by the second transfer section 24b will be described later.

Here, it is preferable that the ordering from the ordering terminal 12 to the photo laboratory 14, that is, the input of a customer's order image and its order information by the input unit 20, the relating (linking) by the order creation unit 22, the preferential transfer of the customer's order information, and the transfer of the customer's order image afterward by the transfer unit 24 are performed using a Web ordering screen provided through the communication means 16 such as the Internet. However, this ordering may be performed using application software separately provided through distribution of a CD-ROM, downloading, or the like. Here, it is preferable that the provision of the Web ordering screen, the distribution of the CD-ROM storing the application software, or the provision of the downloadable application software is performed by the photo laboratory 14 or the administrator or offerer of the digital order processing system of the present invention.

The photo processing laboratory 14 includes a reception unit 26 having a first reception section 26a for preferentially receiving (accepting) the customer's order information from the ordering terminal 12 and a second reception section 26b for receiving (accepting) the customer's order image from the ordering terminal 12, a production planning unit 28 for making an efficient production plan of photo print processing in accordance with the customer's order information received by the first reception section 26a, an order image database (hereinafter referred to as the "order image DB") 30 in which the customer's order image received by the second reception section 26b is accumulated, an image detection unit 32 for confirming that the customer's order image corresponding to the customer's order information, for which the production planning unit 28 has made the production plan, is accumulated in the order image DB 30 and detecting the customer's order image, a digital photo printer (hereinafter referred to as the "photo printer") 34 that creates a photo print of the customer's order image detected by the image detection unit 32 in accordance with the production plan made by the production planning unit 28, and a handover unit 36 for handing over the photo print created by the photo printer 34 to the customer, a person (destination) designated by the customer or the orderer (agency) in accordance with a print reception method or a delivery method designated by the orderer (agency) described in the customer's order information.

The reception unit 26 receives the customer's order information and the customer's order image from the ordering terminal 12. In more detail, the first reception section 26a receives the customer's order information preferentially transferred by the first transfer section 24a of the transfer unit 24 in the ordering terminal 12 and sends the received customer's order information to the production planning unit 28. On the other hand, the second reception section 26b receives the customer's order image transferred by the second transfer section 24b of the transfer unit 24 in the ordering terminal 12 and sends the received customer's order image to the order image DB 30. Here, the order image DB 30 stores and accumulates the customer's order image transferred from the second transfer section 24b of the ordering terminal 12 and sent from the second reception section 26b.

The production planning unit 28 makes a production plan for an efficient photo print processing in advance with reference to the customer's order information preferentially transferred by the first transfer section 24a of the ordering terminal 12 and received by the first reception section 26a. In more detail, the production planning unit 28 newly makes a production plan or edits an already-existing production plan before the start of production of photo prints by the photo printer 34, that is, in advance using the customer's order information sent from the first reception section 26a and stores the production plan in a production plan DB 28a.

The production planning unit 28 is capable of predicting the contents (for instance, the number of prints to be made, the print size, the priority, the image type, and the like) of the customer's order and the reception timing of the order with reference to the contents of the customer's order information, so that it becomes possible to plan the timing of the paper width switching of the photo printer 34 and the timing of inputting the order into the order processing apparatus with consideration given to the characteristics (such as the capacity, the supported paper width, and the finishing type) of the photo printer 34 and the remaining amount of printing paper (photographic paper). Consequently, it becomes possible to make an efficient photo print production plan in advance.

Here, the principal planning factors of such a production plan are the print size, the number of prints to be made, and the delivery date and time contained in the order information and the predicted arrival time of the order image, with the predicted order image arrival time being systematically predicted with reference to a transfer form such as transmission through the communication means 16 like the Internet or media delivery by a collection and delivery service. For instance, in the case of collection by a delivery car, the predicted arrival time is suitably calculated by adding a predetermined time "α" to a time at which the delivery car will arrive at the laboratory. Also, in the case of transfer through a network, the predicted arrival time is suitably obtained by adding a predetermined time "α" to a transfer end time calculated based on a data amount including data waiting to be transferred, a line load, and a line speed.

Here, it is preferable that the production planning unit 28 edits the production plan each time the first reception section 26a receives customer's order information, that is, each time customer's order information is sent from the first reception section 26a. However, the production plan editing may be performed each time a predetermined number of orders are received or each time a predetermined time has elapsed.

It should be noted here that the customer's order information, with reference to which the production plan stored in the production plan DB 28a has been made, and its corresponding customer's order image stored in the order image DB 30 are both assigned the same order ID, so that it is possible to search both of the production plan DB 28a and the order image DB 30 using this order ID.

The image detection unit 32 confirms that the customer's order image corresponding to the order information (order ID), for carrying out the production plan, is accumulated in the order image DB 30 (for instance, confirms the order image by searching the order image DB 30 using the order ID as a search key) and detects the customer's order image in order to create a photo print through digital print processing of the customer's order image corresponding to the customer's order information by the photo printer 34 in accordance with the production plan made by the production planning unit 28. That is, in order to carry out the production plan, the image detection unit 32 confirms whether the customer's order image corresponding to the customer's order information preferentially transferred has been transferred by the second transfer section 24b, received by the second reception section 26b, and stored in the order image DB 30. If the customer's order image is not yet transferred and received, that is, if the image is not yet stored, the image detection unit 32 waits (is placed under a waiting status) for the order image to be transferred by the second transfer section 24b, confirms that the order image has been transferred by the second transfer section 24b, received by the second reception section 26b, or stored in the order image DB 30, and detects the customer's order image stored in the order image DB 30.

Here, the image detection unit 32 waits for the corresponding customer's order image to be transferred until the current time has reached a time predicted from the customer's order information or a time predicted during the production planning. However, if it is confirmed that the corresponding order image does not yet arrive at the photo laboratory 14, that is, the reception by the second reception section 26b or the storage into the order image DB 30 is not yet performed even when the current time has reached the predicted time, the image detection unit 32 detects an abnormality and the second reception section 26b automatically issues a warning showing this situation to the ordering terminal 12 (second transfer section 24b thereof) that is a transfer source, thereby urging the ordering terminal 12 to transfer the order image. Here, information showing this situation may also be transmitted to the production planning unit 28 so that the production planning unit 28 reviews and revises the production plan. Alternatively, when it is confirmed that the corresponding order image does not yet arrive even when the current time has reached the predicated time, the image detection unit 32 accesses the ordering terminal 12 that is a transfer source and reads out the order image from the ordering terminal 12.

With this construction, it becomes possible to detect an abnormality occurring to an order in advance and to cope with the abnormality without delay. That is, it becomes possible to give a timely warning about a trouble over an order and to take swift measures against the trouble, which improves customer service.

The photo printer 34 creates a photo print of the customer's order image detected by the image detection unit 32 as ordered by the customer in accordance with the production plan made by the production planning unit 28 using the customer's order information. It is possible to use any of conventionally known digital photo printers as the photo printer 34. The photo printer 34 receives the production plan created from the customer's order information and receives its corresponding customer's order image from the image detection unit 32 after the detection of the customer's order image from the order image DB 30 by the image detection unit 32 in accordance with the production plan through search using the order ID or the like. Alternatively, the photo printer 34 receives the production plan from the production planning unit 28 and reads out the corresponding order image directly from the order image DB 30 in accordance with the received production plan by, for instance, searching the order image DB 30 using the order ID. Still alternatively, the photo printer 34 reads out the production plan directly from the production plan DB 28a and reads out the corresponding order image directly from the order image DB 30 in accordance with the read-out production plan. Note that the photo printer 34 is not required to read out the corresponding order image directly from the order image DB 30. For instance, the photo printer 34 may send the acquired production plan to the image detection unit 32, cause the image detection unit 32 to detect the corresponding order image, and receive the order image detected by the image detection unit 32.

It should be noted here that in the case where the attribute data (such as a reduction image like a thumbnail image) of the order image, whose print order has been received, are contained in the customer's order information, the photo printer 34 at the photo laboratory 14 is capable of grasping in advance the reduction image of the order image to be received, so that it becomes possible to perform image verification and correction trial using the reduced image received in advance. The results of the verification and trial can be incorporated into the production plan to automatically produce an appropriate photo print of a quality level comparable to that attained by performing manual correction.

The handover unit 36 hands over the photo print created by the photo printer 34 to the customer, a person (destination) designated by the customer or the orderer (agency) in accordance with a print reception method or a delivery method designated by the orderer (agency) described in the customer's order information.

When the customer's order information describes the handover at a customer's house or the like as the customer's print reception method, the handover unit 36 mails or delivers the photo print of the customer's order image to an address described in the order information using the delivery means (such as a postal service or a delivery company) 18. In this case, the fee of the photo print is paid using a known method such as online payment using a credit card or the like, cash on delivery by the delivery means 18, or payment using a bill.

Also, when the customer's order information describes the handing at the agency as the customer's print reception method, the handover unit 36 delivers the photo print outputted by the photo printer 34 from the photo laboratory 14 to the agency by the dedicated delivery means (such as a collection car of a collection service) 18. In this case, when the customer visits the counter of the agency, the photo print may be handed to the customer in exchange for payment. Alternatively, like in the case described above, the photo print may be further mailed or delivered from the agency to the customer's house by the delivery means 18 described above.

Further, when the customer's order information describes the handing at the counter of the photo laboratory 14 as the customer's print reception method, the photo print outputted by the photo printer 34 is handed to the customer visiting the counter of the photo laboratory 14 in exchange for payment.

The communication means 16 is a communication network or a communication line used to transfer the customer's order image and order information (order data) from the ordering terminal 12 to the photo laboratory 14. As the communication means 16, for instance, it is possible to use a conventionally known communication network or communication line such as the Internet or a LAN.

By the way, in the above description, the communication means 16, such as the Internet, is used as a means for transferring the customer's order information and order image from the ordering terminal 12 to the photo laboratory 14, although the present invention is not limited to this. For instance, the transfer means may be delivery using a digital recording medium such as an optical recording medium, a magnetic recording medium, or various other memory media. In this case, as indicated by dotted lines in FIG. 1, the delivery means 18 for delivering the photo print created by the photo printer 34 at the photo laboratory 14 from the photo laboratory 14 to the ordering terminal 12 side may be used as a delivery means for delivering the digital recording medium.

For instance, the order information of the customer's order received by the ordering terminal 12, such as the counter reception machine at the agency, may be transferred to the photo laboratory 14 by the communication means 16, such as the Internet, whenever requested and the order image corresponding to the order information may be transferred in accordance with a wish of the customer.
That is, in the case of an urgent order, the order image is transferred by the communication means 16 such as the Internet. On the other hand, in the case of an ordinary order, the order image is recorded into a medium using a media drive provided for the second transfer section 24b or a media drive of the image input section 20a, the medium storing the order image is transferred to the photo laboratory 14 using the dedicated delivery means 18 such as a collection and delivery service or a collection service, the transferred medium is loaded into a slot of a media drive provided for the second reception section 26b, and the order image is read out from the medium. With this construction, it becomes possible to use the present system as a backup for an off-line order system (KIOSK).

Also, when it is impossible to transfer the customer's order information from the ordering terminal 12, such as the customer's terminal or in particular the counter reception machine at an agency, via the communication means 16, such as the Internet, due to a communication trouble or the like of the communication means 16, the order information and order image of each customer's order accumulated in the ordering terminal 12 until then may be respectively recorded into mutually different media using the media drives respectively provided for the first transfer section 24a and the second transfer section 24b, the medium storing the customer's order information and the medium storing the order image may be transferred together to the photo laboratory 14 using the dedicated delivery means 18 such as the collection and delivery service or the collection service. In this case, at the photo laboratory 14, the customer's order information is read out from the medium storing the order information using a media drive provided for the first reception section 26a, a production plan is made by the production planning unit 28, the customer's order image is read out from the medium storing the order image using a media drive provided for the second reception section 26b in accordance with the production plan, the read-out order image is print-processed by the photo printer 34, and a photo print is outputted. This construction is effective at coping with a communication trouble or the like.

It should be note here that when these constructions are adopted, the medium storing the customer's order image and transferred to the photo laboratory 14 may be returned to the customer together with the print result created by the photo printer 34.

The digital photo order processing system of the present invention is basically constructed in the manner described above.

Next, the digital photo order processing system of the present invention will be specifically described with reference to examples.

### <First Example>

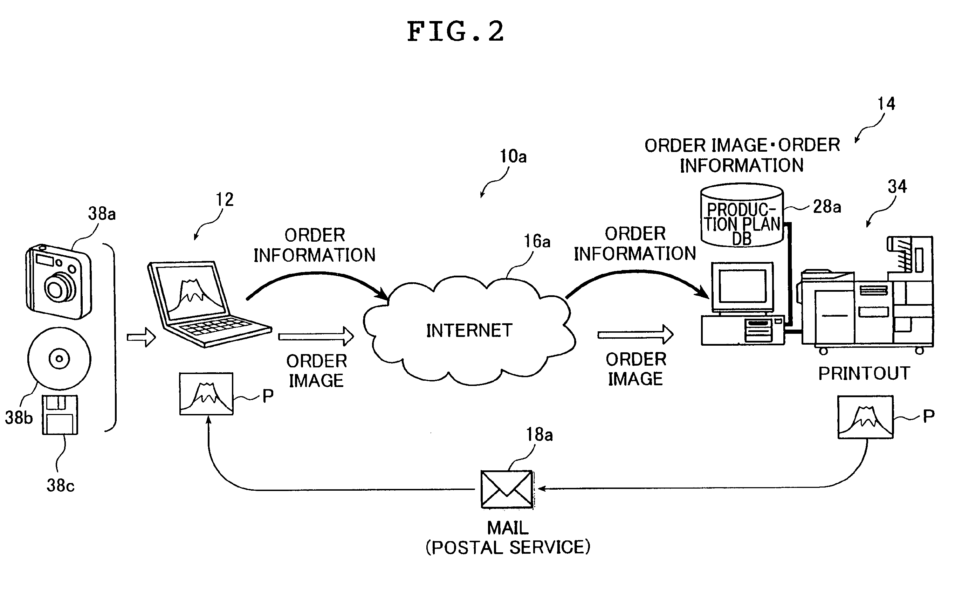

FIG. 2 is a schematic diagram showing a first embodiment of the digital photo order processing system according to the present invention and an operation thereof.

An order processing system 10a shown in this drawing has a form where an ordering terminal 12, such as a customer's terminal (PC) or a counter reception machine, is directly connected to a photo laboratory 14, an online order is placed from the ordering terminal 12 to the photo laboratory 14 via the Internet 16a (communication means 16 in this example), and a photo print P outputted from the photo laboratory 14 is delivered by mail 18a. For instance, in the order processing system 10a of this example, a customer places a print order from his/her house to the photo laboratory 14 through the Internet 16a and receives a print result by mail.

In the order processing system 10a, when customer's digital images (image files) are recorded in a digital camera 38a, the digital camera 38a is first connected to the ordering terminal 12 and the customer's image files are read out from the digital camera 38a as candidates for an order image. Also, when the customer's image files are recorded in a medium for digital cameras (such as a CD-R 38b, a flexible disk (FD), a SmartMedia™, or a SD card™) or another medium 38c, the CD-R 38b or the medium 38c is loaded into a media drive (image input section 20a, see FIG. 1) of the ordering terminal 12 and the customer's image files are read out from the CD-R 38b or the medium 38c as candidates for an order image. Further, the ordering terminal 12 reads out digital images captured with a scanner or image files in a HDD as candidates for an order image.

It should be noted here that in the following description, the digital camera 38a, the CD-R 38b, and the medium 38c will be collectively referred to as the "image supplying medium 38".

Here, the ordering terminal 12 (image input section 20a thereof, see FIG. 1) has a function of confirming the locations of the image files in the image supplying medium 38 to obtain a list of the image files and a function of reading the image files as candidates for an order image.

Next, the read images are displayed on a display device of the ordering terminal 12, an order image is selected, and its order information is inputted.

As the order information, order contents (such as the size and the number of copies to be made) are collectively or individually set for the selected order image that is a print order target by the ordering terminal 12 (order information input section 20b thereof, see FIG. 1). At this time, reception means and method are inputted and customer's information or orderer's information is further inputted as necessary. Then, the order image and the order information are related to each other by the ordering terminal 12 (order creation unit 22 thereof).

The order information inputted and related to the order image by the ordering terminal 12 in this manner is preferentially transferred from the ordering terminal 12 (first transfer section 24a thereof, see FIG. 1) to the photo laboratory 14 via the communication means such as the Internet 16a. After the transfer of the order information is finished, its corresponding order image is transferred from the ordering terminal 12 (second transfer section 24b thereof, see FIG. 1) to the photo laboratory 14 in this manner.

It should be noted here that it is preferable that at this time, each time a customer's order is created, its corresponding order information is transferred. However, when multiple orders are created, it is preferable that order information corresponding to these orders is sent sequentially. In particular, immediately after recovering from a line abnormality of the Internet 16a or the like, when order information corresponding to multiple orders is waiting to be transferred, the order information is transferred sequentially.

Also, it is preferable that even during the transfer of an order image of a preceding order, when a succeeding order is created, it is not waited for the transfer of the order image of the preceding order to be completed but the order information of the succeeding order is transferred by interrupting the transfer of the order image of the preceding order. Then, after the transfer of the order information of the succeeding order is finished, the transfer of the order image of the preceding order is resumed. When it is possible to transfer the order image of the preceding order in parallel during interrupt transfer of the order information of the succeeding order, the order image of the preceding order may be transferred in parallel or by background processing without interruption. Parallel transfer of the order image and the order information may be performed through lines of plural channels, if any. Alternatively, one-channel line may be used in the time sharing mode or both may be used in combination.

It should be noted here that order images accumulated in the ordering terminal 12 are transferred to the photo laboratory 14 at an appropriate timing after the completion of order information transfer. When the next order is placed during the order image transfer, however, the order image transfer to the photo laboratory 14 is performed in units of orders (photo orders) in parallel with order reception processing (image input, order information input (relating), and order information transfer (interruption)).

The characteristics of the first transfer section 24a (first transfer means) and the second transfer section 24b (second transfer means) in the system form of this first example are summarized below.
(First Transfer Means)
   Transfer data: order information
   Transfer unit: order-by-order
   Transfer route: from the ordering terminal (customer's PC/counter reception machine) 12 to the photo laboratory 14 Transfer timing: immediately after an order is received or immediately after a line connection is established under a state where any order information waits to be transferred Processing priority: image input/order information input>order information transfer>order image transfer
(Second Transfer Means)
   Transfer data: order image
   Transfer unit: order-by-order
   Transfer route: from the ordering terminal (customer's PC/counter reception machine) 12 to the photo laboratory 14 Transfer timing: when any order images wait to be transferred under a state where a line connection is established
   Processing priority: image input/order information input>order information transfer>order image transfer

At the photo laboratory 14, after the transfer of the order information is finished, without waiting for its corresponding order image to be transferred, a production plan is made and is stored in a production plan DB 28a. Then, after the order image is transferred, a photo printer 34 performs digital print processing and outputs the photo print P. After the printout, the photo print P is mailed by mail (postal service) 18a to an orderer (ordering terminal 12) side, or a destination or person designated by the orderer.

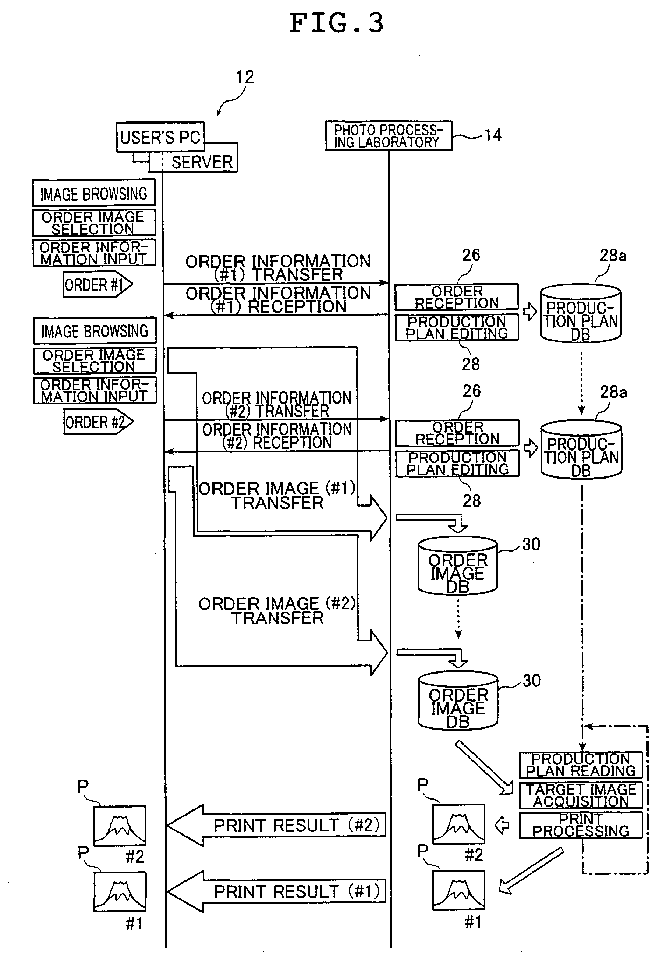

FIG. 3 is a flowchart showing a processing flow of the first example, that is, an example of the transfer of order information and order images of multiple customers' orders in the order processing system 10a.

In the following description, the flow of the order information and order images of the customers' orders and print results between the user's PC 12 and the photo laboratory 14 will be explained with reference to FIG. 3 by assuming that the ordering terminal 12 is the user's PC connected to a server.

In this drawing, an order #1 is placed using the user's PC 12. In more detail, a customer reads out customer's images, displays them on a display device, browses the displayed images, selects an order image, inputs order information so as to be related to the selected order image, creates order data, and creates the order #1.

After the order #1 is created using the user's PC 12, order information #1 is first transferred from the user's PC 12 to the photo laboratory 14 via the server. When the transfer is finished, order reception by the reception unit 26 is performed at the photo laboratory 14 and a signal showing that the order information #1 has been received is returned to the user's PC 12 side via the server.

At the photo laboratory 14, after the order reception by the reception unit 26, the order information #1 is sent to the production planning unit 28, which then performs production plan editing based on the order information #1 and stores the edited production plan in the production plan DB 28a.

On the other hand, at the user's PC 12, on receiving the signal indicative of the reception of the order information #1 from the photo laboratory 14, the transfer of an order image #1 of the order #1 is started via the server. In addition, the image browsing, order image selection, and order information input concerning the next order #2 are performed, thereby creating the order #2.

Following this, at the user's PC 12, after the creation of the order #2, the transfer of the order image #1 corresponding to the order #1 is temporarily suspended by an interruption and the transfer of order information #2 to the photo laboratory 14 is started via the server. When the transfer of the order information #2 is finished, a signal indicative of reception of the order information #2 is returned from the photo laboratory 14 to the user's PC 12 side via the server. On receiving the signal indicative of the reception of the order information #2, the transfer of the order image #1 of the order #1 is resumed at the user's PC 12.

On the other hand, at the photo laboratory 14, the order reception by the reception unit 26, the production plan editing based on the order information #2 by the production planning unit 28, and the storage of the edited production plan into the production plan DB 28a are performed.

Here, when the transfer of the order image #1 corresponding to the order #1 from the user's PC 12 to the photo laboratory 14 via the server is finished, the storage of the transferred order image #1 into the order image DB 30 is performed at the photo laboratory 14 and transfer of the order image #2 corresponding to the order #2 to the photo laboratory 14 via the server is started at the user's PC 12.

Following this, when the transfer of the order image #2 corresponding to the order #2 from the user's PC 12 to the photo laboratory 14 is finished, the transferred order image #2 is stored in the order image DB 30 at the photo laboratory 14.

In the example shown in FIG. 3, the user's PC 12 is connected to the photo laboratory 14 via the server and the transfer of the order information and the order image as well as the reception of a signal indicative of reception of the order information and the order image are performed via the server. However, this is not the sole case of the present invention and the user's PC 12 may be directly connected to the photo laboratory 14 without the intermediary of the server so that the transfer of the order information and the order image as well as the reception of a signal indicative of reception of the order information and the order image can be directly performed without the intermediary of the server.

Then, the photo printer 34 at the photo laboratory 14 (see FIGS. 1 and 2) reads the production plan from the production plan DB 28a, acquires a target image from the order image DB 30 in accordance with the production plan, performs print processing, and outputs a photo print (#2) P as a print result #2. Then, the photo print P is mailed or delivered to the user's PC 12 side.

Following this, at the photo laboratory 14, the reading of the production plan from the production plan DB 28a, the acquisition of a target image from the order image DB 30 in accordance with the production plan, print processing, and the output of a photo print (#1) P that is a print result #1 are performed. Then, the photo print (#1) P that is the print result #1 is mailed or delivered to the user's PC 12 side.

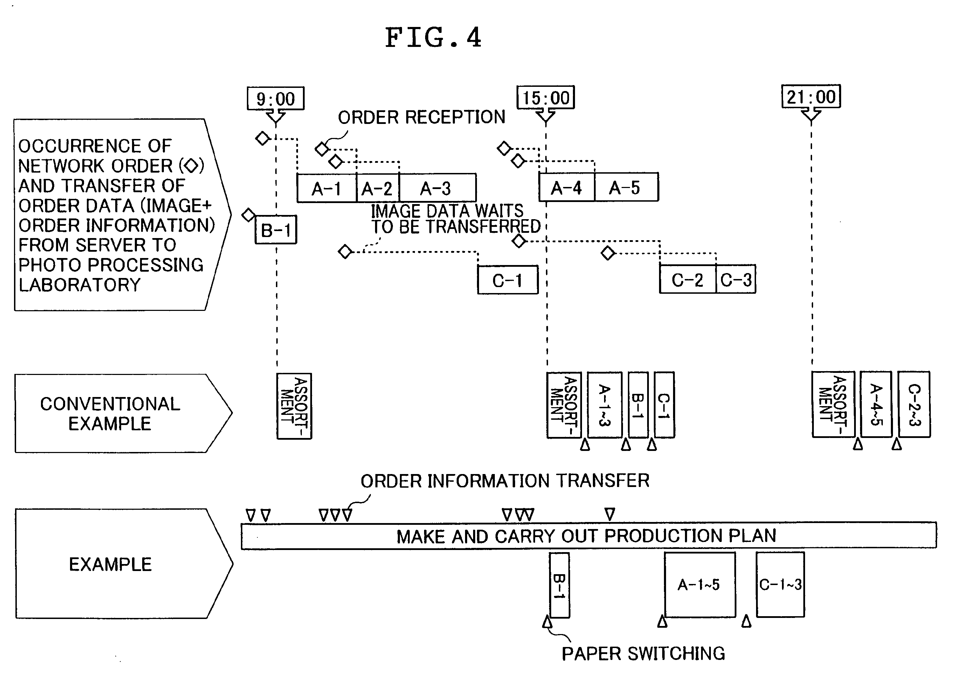

FIG. 4 is a schematic diagram where the first example and the conventional example are compared with each other based on an exemplary print production process in a network ordering system. In more detail, for the sake of comparison between the first example and the conventional example, this drawing diagrammatically shows a relation between network orders and a print production process on a certain day where three kinds of paper having different paper widths (A, B, and C) are used.

In FIG. 4, it is assumed that an order A-1 corresponding to a paper width A and an order B-1 corresponding to a paper width B are received (◊) before 9 o'clock, orders A-2 to A-5 corresponding to the paper width A and orders C-1 and C-2 corresponding to a paper width C are received (◊) between 9 o'clock and 15 o'clock, and an order C-3 corresponding to the paper width C is received (◊) between 15 o'clock and 21 o'clock.

Here, in the first example, concurrently with the reception of each order (0), its order information is transferred. Then, in the case of the order B-1, order data containing an order image of this order is transferred without delay. In the case of the orders A-1 to A-5 and C-1 to C-3, order data containing order images of these orders is transferred after a period of data transfer waiting time (...) during which order data containing order images of other orders is transferred. Therefore, in the first example, concurrently with the order reception (0), each order information is transferred (V) and a production plan is edited with reference to the order information. As a result, at 15 o'clock, eight orders except the order C-3 have been received and production plan editing has been performed. Also, the transfer of the order images corresponding to the orders except the orders A-4, A-5, and C-2 is finished at 15 o'clock, so that the paper of the photo printer 34 (see FIG. 2) is switched to the paper width B (Δ) and the print processing of the order B-1 is performed. Then, the order C-3 is received and the production plan is edited again. After the transfer of the order image of the order A-5 is finished, switching to the paper width A is performed (Δ) and the print processing of the orders A-1 to A-5 is performed. Finally, after the transfer of the order image of the order C-3 is finished, switching to the paper width C is performed (Δ) and print processing of the orders C-1 to C-3 is performed.

In contrast to this, in the conventional example, at the timings of the order data (order image) transmission in the first example, order data in which the order images and the order information are integrated with each other is transferred. Consequently, even if order assortment is performed at 9 o'clock, the order data transfer is not finished and therefore it is impossible to perform print processing before the next order assortment at 15 o'clock.

At 15 o'clock, the transfer of the order data of five orders A-1 to A-3, B-1, and C-1 is finished, so that order assortment is performed. Then, between 15 o'clock and 21 o'clock, first, switching to the paper width A is performed (Δ) and print processing of the orders A-1 to A-3 is performed. Then, switching to the paper width B is performed (Δ) and print processing of the order B-1 is performed. Finally, switching to the paper width C is performed (L) and print processing of the order C-1 is performed.

Following this, the order data of the orders A-4, A-5, C-2, and C-3 is transferred between 15 o'clock and 21 o'clock (that is, the transfer of every order data on that day is finished by 21 o'clock), so that order assortment is performed. Then, after 21 o'clock, print processing of the orders A-4 to A-5 is performed by performing switching to the paper width A (Δ) and print processing of the orders C-2 to C-3 is performed by performing switching to the paper width C (Δ).

As can be understood from the results described above, in the conventional example, it is required to perform the print processing using the respective paper widths twice between 15 and 21 o'clock and after 21 o'clock. Therefore, the photo printer is required to operate for a long time and the operator needs to work for a long time. Also, the paper width switching of the three kinds of the printing paper is performed as many as five times. Consequently, the operation efficiencies of apparatuses and facilities, such as the photo printer, and the labor productivity of the operator are lowered.

In contrast to this, in the first example, it is possible to collectively and intensively perform print processing using the respective paper widths in a short time period between 15 o'clock and 21 o'clock. Also, the paper width switching of the printing paper is performed only three times in the case of the three kinds of paper. As a result, the operation efficiencies of the apparatuses and facilities, such as the photo printer, and the labor productivity of the operator are improved in comparison with the conventional example.

### <Second Example>

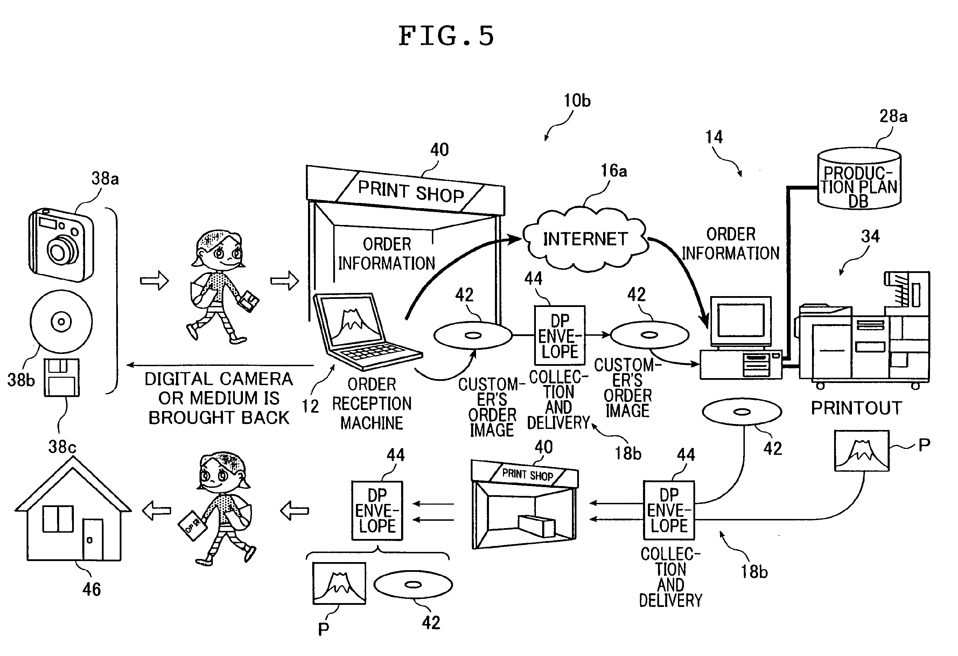

FIG. 5 is a schematic diagram showing another example of the digital photo order processing system according to the present invention and an operation thereof.

An order processing system 10b shown in this drawing has a form where a counter reception machine (ordering terminal 12) at an agency (print shop) 40 is directly connected to a photo laboratory 14 through the Internet 16a. In this system, a customer brings an image supplying medium 38 to the counter of the agency 40 and orders a print, order information is transferred through the Internet 16a, its corresponding order image is transferred using a CD-R 42 that is a recording medium for ordering, and the customer receives a print result at the counter of the agency 40.

In this embodiment, when the customer brings the image supplying medium 38 to the counter of the agency 40 and places a print order, order image input and order information input are performed using the ordering terminal 12 that is the counter reception machine at the agency 40 in the same manner as in the first example, thereby receiving the print order from the customer. Following this, the received order information is transferred from the ordering terminal 12 to the photo laboratory 14 through the Internet 16a like in the first example. In this example, however, the order image is recorded on the CD-R 42 by the ordering terminal 12, this CD-R 42 is put into a DP envelope 44, and the DP envelope 44 is transferred from the agency 40 to the photo laboratory 14 using a collection and delivery service 18b. At the photo laboratory 14, the CD-R 42 is extracted from the transferred DP envelope 44 and the recorded order image is read out from the CD-R 42 and is stored in an order image DB 30 (see FIG. 1).

In this example, like in the first example, at the photo laboratory 14, after the transfer of the order information is finished, without waiting for the CD-R 42 storing the corresponding order image to be transferred, a production plan is made and is stored in a production plan DB 28a. Following this, when the order image is read out from the transferred CD-R 42, a photo printer 34 performs digital print processing and outputs a photo print P. After the printout, the photo print P is put in the DP envelope 42 together with the CD-R 42 and is delivered to the agency 40 using the collection and delivery service 18b that is a dedicated delivery means. At the agency 40, the DP envelope 42 containing the photo print P and the CD-R 42 is handed to the customer visiting the counter of the agency 40 in exchange for payment. Then, the customer brings the DP envelope 44 back to his/her house 46.

Next, a workflow in the digital photo order processing system of the second example will be described.

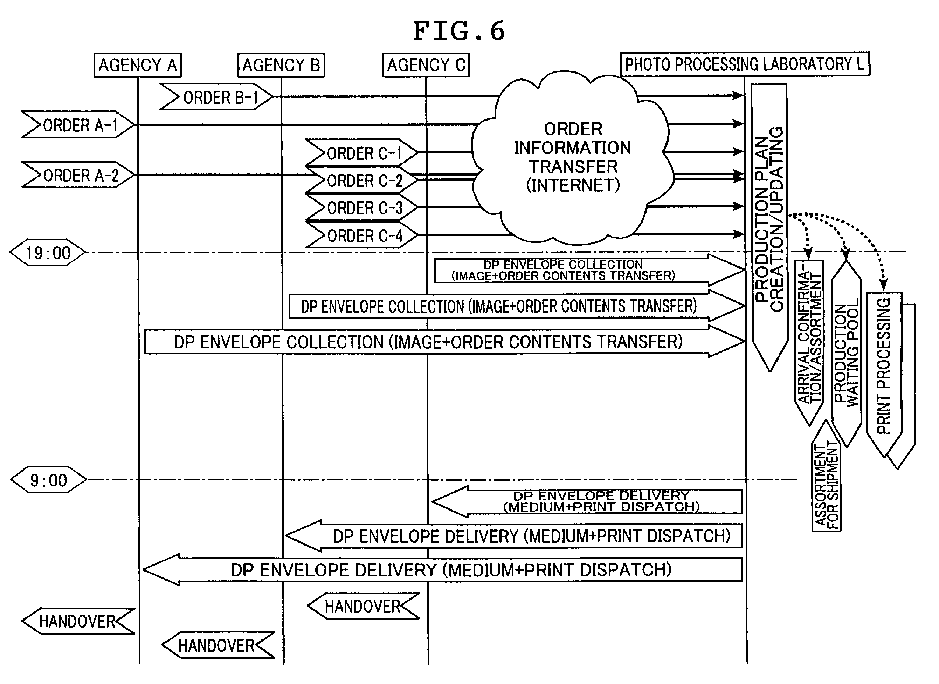

FIG. 6 is a flowchart showing the workflow in the digital photo order processing system of the second example where digital photo prints are ordered using counter reception machines.

It should be noted here that for the sake of comparison with the conventional example shown in FIG. 9, in the example of the present invention shown in FIG. 6, it is assumed that the reception of customers' orders at agencies A, B, and C, the recording of customers' order images onto media at the agencies A, B, and C, the transfer of DP envelopes containing the media from the agencies A, B, and C to the photo laboratory L, the transfer of the DP envelopes containing prints and the media from the photo laboratory L to the agencies A, B, and C, and the handing of the DP envelopes to customers are performed in the same manner as in the conventional example shown in FIG. 9.

Accordingly, the detailed description of each overlapping portion will be omitted and each different portion will be mainly described.

In this drawing, it is assumed that orders A-1 and A-2 are received at the agency A, an order B-1 is received at the agency B, and orders C-1 to C-4 are received at the agency C using the counter reception machines at the respective agencies until 19 o'clock on a certain day.

At each of the agencies A, B, and C, at each point in time when an order is received, only order information showing the order contents corresponding to a customer's order image is transferred to the photo laboratory L through the Internet at whatever time. In addition, a medium storing the customer's order image or the order image as well as the order information is separately created and is put in a DP envelope on which required order information has been written. The DP envelope is stored until a collection and delivery service (collection and delivery car) arrives at the agency.

On the other hand, at the photo laboratory L, each time the transfer of the order information corresponding to one of the orders is finished, a production plan is created or updated (edited) with reference to the transferred order information (a size, the number of copies to be made, a finishing type, a type of photo product, a delivery date and time, a reception means, and the like). Note that in the illustrated example, the updating of the production plan of the print processing on that day is finished by 19 o'clock.

In this example, it is possible to grasp the contents of the orders with reference to their corresponding order information before the arrival of the DP envelopes, so that it becomes possible to make a production plan and to group the orders into lots with consideration given to the number of production facilities (printers), the characteristics (such as the production capacity, supported paper width, and roll length) of each production facility, delivery dates and times, shipment dates and times, and the like.
In more detail, it becomes possible to determine the paper width settings of the facilities, the production time of each order (print order), the allocation of the lots to the facilities, and the like.

Following this, in the illustrated example, the collection and delivery service collects media-containing DP envelopes from the respective agencies after 19 o'clock and transports them to the photo processing laboratory L.

Next, at the photo processing laboratory L, after receiving the DP envelopes, the arrival of the DP envelopes and the media is confirmed, assortment is performed in accordance with the production plan, the media are extracted from the respective DP envelopes, the order images are read out from the respective media, and the respective orders are pooled as orders waiting to be processed. In addition, these orders are grouped into lots in accordance with the production plan and are print-processed by planned facilities. In this manner, photo prints are produced.

With this construction, it becomes possible to perform the assortment and production (print processing) based on the production plan at the photo laboratory L, so that variations and wastes resulting from personal judgments made by respective operators are suppressed.

It should be noted here that in this example, the production plan is made before the DP envelopes are collected, so that it is possible to perform the print processing in parallel with the reception of the DP envelopes. As a result, it becomes possible to make the effective use of the production facilities.

Also, in this example, it is possible to grasp an order reception situation with reference to the order information at whatever time. As a result, it becomes unnecessary to send the collection and delivery service (collection car) to an agency where no order is received. Inversely, when many orders are received at an agency, it is possible to detect this situation and to collect the orders by sending an extra collection car to the agency. When an agency receives no order, the agency may transfer to the photo processing laboratory L a message that no order is received.

For orders whose print processing at the photo processing laboratory L is finished, their corresponding print results (photo prints) and used media are put in the DP envelopes and the DP envelopes are assorted for shipment to the agencies A, B, and C.

After the assortment for the shipment to the agencies A, B, and C, the DP envelopes containing the photo prints and the media are returned (delivered or dispatched) to the agencies A, B, and C by the collection service (collection car) that makes the rounds of the agencies A, B, and C periodically (after 9 o'clock, in the illustrated example).

Finally, at the agencies A, B, and C, the DP envelopes containing the photo prints and the media are handed to the customers in exchange for payment.

In FIGS. 1 and 2, the transfer of order data, such as order information and an order image, to the photo laboratory 14 through the communication means 16, such as the Internet, is directly performed from the ordering terminal 12, such as a customer's terminal like a customer's PC, a counter reception machine, or an automatic reception machine, to the photo laboratory 14. However, the present invention is not limited to this and the order data may be transferred via a center server or the like.

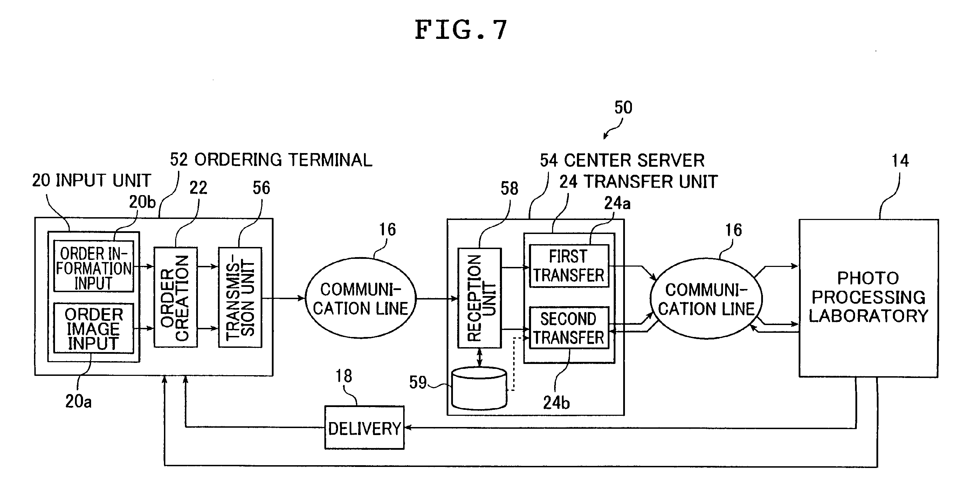

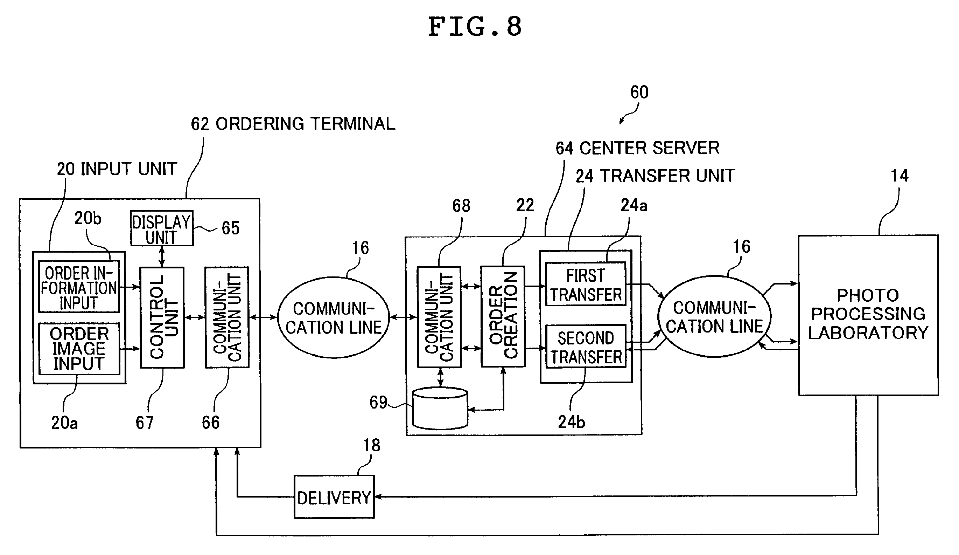

FIG. 7 and FIG. 8 are each a block diagram of another embodiment of the order processing system of the present invention where the transfer of order data, such as order information and an order image, is performed via a center server.

Order processing systems 50 and 60 shown in FIGS. 7 and 8 respectively include ordering terminals 52 and 62, center servers 54 and 64, a photo laboratory 14, and communication means 16, such as the Internet, through which communication therebetween is performed. The order processing systems 50 and 60 have the same construction as the order processing system 10 shown in FIG. 1 except that the systems 50 and 60 include the center servers 54 and 64, respectively, and the transfer unit 24 that is one of the construction elements of the ordering terminal 12 of the order processing system 10 shown in FIG. 1 and the order creation unit 22 (in the case of the order processing system 60 shown in FIG. 8) are in the center servers 54 and 64. Therefore, the same construction elements are given the same reference numerals and the detailed description thereof will be omitted. This form where the center servers 54 and 64 are used in this manner is suited for a case where the ordering terminals 52 and 62 are composed of multiple customer's PCs, counter reception machines, or automatic reception machines.

In the order processing system 50 shown in FIG. 7, order data containing order information and an order image as created in the ordering terminal 52 is transmitted from the ordering terminal 52 to the center server 54 through the communication means (communication line) 16. Then, the order information in the order data received is preferentially transferred from the center server 54 to the photo laboratory 14 through the communication means 16 and the order image is transferred to the photo laboratory 14 through the communication means 16 after the transfer of the order information.

The ordering terminal 52 includes an input unit 20 for inputting the order information and the order image, an order creation unit 22 for creating order data by relating the order information and the order image to each other, and a transmission unit 56 for transmitting the order data containing the order information and the order image to the center server 54 through the communication means 16.

The center server 54 includes a reception unit 58 for receiving the order data containing the order information and the order image transmitted from the transmission unit 56 of the ordering terminal 52 through the communication means 16, a memory 59 for temporarily storing at least the order image in the order data received by the reception unit 58, and a transfer unit 24 having a first transfer section 24a for preferentially transferring only the order information in the order data received by the reception unit 58 to the photo laboratory 14 through the communication means 16 and a second transfer section 24b for transferring the order image in the order data read out from the memory 59 to the photo laboratory 14 through the communication line 16 after the transfer of the order information.

On the other hand, in the order processing system 60 shown in FIG. 8, order information inputted by a customer and an order image are each transmitted from the ordering terminal 62 to the center server 64 through the communication means 16. The center server 64 receives the order image and the order information inputted by the customer and relates the order image and the order information to each other to thereby create order data. Then, the order information in the order data is preferentially transferred from the center server 64 to the photo laboratory 14 through the communication means 16 and the order image is transferred to the photo laboratory 14 through the communication means 16 after the transfer of the order information.

The ordering terminal 62 includes an input unit 20 for inputting the order information and the order image and a communication unit 66 for transmitting the order information and the order image inputted by the input unit 20 to the center server 64 through the communication means 16. The ordering terminal 62 further includes a display unit 65 for displaying an input screen for order information, and a control unit 67 for controlling these units. The ordering terminal 62 has access to the center server 64 through the communication unit 66 by the action of the control unit 67 to display on the display unit 65 the input screen for inputting the order information corresponding to the order image transmitted to the center server 64 making use of an Internet browser to thereby allow the order information to be inputted by the input unit 20. The ordering terminal 62 may of course receive from the center server 64, information necessary for displaying the input screen to allow the order information to be inputted by the input unit 20 and a plug-in application or other software added to the browser therefor, and use them under the control of the control unit 67.

The center server 64 includes a communication unit 68 for receiving the order information and the order image transmitted from the communication unit 66 of the ordering terminal 62 through the communication means 16, a memory 69 for temporarily storing the order image received by the communication unit 68, an order creation unit 22 for creating order data by relating the order information inputted by a customer and received by the communication unit 68 to the order image read out from the memory 69, and a transfer unit 24 having a first transfer section 24a for preferentially transferring only the order information in the order data to the photo laboratory 14 through the communication means 16 and a second transfer section 24b for transferring the order image in the order data to the photo laboratory 14 through the communication means 16 after the transfer of the order information.

In the center server 64, the order creation unit 22 reads out an order image from the memory 69 in response to the access from the ordering terminal 62, and at the same time, information necessary for inputting order information corresponding to the read-out order image (information necessary for the input screen (browser) displayed on the display unit 65 of the ordering terminal 62) and software (plug-in application) are transmitted from the communication unit 68 to the ordering terminal 62 for example connected online through the communication means 16 together with information on the order image or a thumbnail (reduced) image.

As a result, the ordering terminal 62 receives the transmitted information and software in the communication unit 66 and displays on the display unit 65 the input screen for the order information corresponding to the information on the order image or the order image including the thumbnail image, under the control of the control unit 67.

In the ordering terminal 62, a customer inputs the order information from the information input section 20b on the input screen for the order image displayed on the display unit 65. The thus inputted order information passes through the control unit 67 and the communication unit 66 to be transferred to the communication unit 68 of the center server 64 through the communication means 16.

In the center server 64, the order information inputted by the customer and received by the communication unit 68 is sent to the order creation unit 22, where the order image and the order information inputted by the customer are related to each other to create order data.

In the system forms shown in FIGS. 7 and 8, the order information of a customer's order is preferentially transferred to the photo laboratory 14. As a result, needless to say, it becomes possible to make an efficient production plan at the photo laboratory 14 based on the preferentially transferred order information of the customer's order before the transfer of the order data, such as the order image of the customer's order, is finished.

It should be noted here that in these embodiments, the transfer of order information of a customer's order between the center server 54/64 and the photo laboratory 14, the transfer of an order image of the customer's order between the ordering terminal 62 and the center server 64, and the input of the order information are performed through the communication means 16 such as the Internet. However, the transfer of order data including order information and an order image of a customer's order between the ordering terminal 52 and the center server 54 and the transfer of the order image of the customer's order between the center server 54/64 and the photo laboratory 14 may not be performed through the communication means 16 but through recording into a recording medium such as a CD-R to be delivered by a collection and delivery service or other delivery means.

Next, a specific example of the order processing system 50 shown in FIG. 7 will be described. In this example, the ordering terminal (such as a customer's PC or a counter reception machine) 52 that is an apparatus at an ordering place and the photo laboratory 14 are connected to each other via the center server 54, the ordering terminal 52 is given an order data creating function and the center server 54 is given an order reception function and an order transfer function to the photo laboratory 14 where no Web service is used and a GUI exists on a local application side. In this case, examples of the ordering terminal 52 include a customer's PC or a counter reception machine where order creation software is supplied and installed in advance for example by means of a CD or the like, and a customer's PC where order creation software is downloaded from the center server 54 connected online and installed. In the customer's PC or the counter reception machine, order data can be created making use of the GUI displayed on the display screen.

In this example, the image input, order information input and creation of order data using the ordering terminal (such as a customer's PC or a counter reception machine) 52 are performed in the same manner as in the case of the ordering terminal 12 of the first example shown in FIG. 2.

The order information in the created order data is uploaded from the ordering terminal 52 to the center server 54. After the uploading of the order information, the order image in the order data is then transferred to the center server 54.

It should be noted here that in general, after the transfer of the order information and the order image in one set of order data is finished, the processing proceeds to the reception of the next set of order data. However, the transfer may be performed in parallel with the reception of the next set of order data. That is, in order to increase efficiency, the order information and order image in the preceding set of order data may be transferred in the background. This background transfer is effective when the transfer of the order image takes a long time.

The center server 54 transfers the order information uploaded from each ordering terminal 52 to the photo laboratory 14 through the communication means 16. At this time, even when the order image of a preceding order is currently transferred, the order information of a succeeding order is transferred by interrupting the order image transfer without waiting for the completion of the order image of the preceding order. Here, the order information may be downloaded from the center server 54 in response to an action taken on the photo laboratory 14 side.

Next, the center server 54 transfers the order image uploaded from the ordering terminal 52 and accumulated to the photo laboratory 14 in units of orders. Note that it is preferable that the transfer of the order image is performed in parallel with the transfer of order information. Also, like in the case of the order information, the order image may be downloaded from the center server 54 in response to an action taken on the photo laboratory 14 side.

The characteristics of the first transfer section 24a (first transfer means) and the second transfer section 24b (second transfer means) in the system form of this example are summarized below.
(First transfer means)
   Transfer data: order information
   Transfer unit: order-by-order
   Transfer route: from the center server 54 to the photo laboratory 14
   Transfer timing: immediately after order information is uploaded or immediately after a line connection is established under a state where any order information waits to be transferred
   Processing priority: order information transfer>order image transfer
(Second transfer means)
   Transfer data: order image
   Transfer unit: order-by-order
   Transfer route: from the center server 54 to the photo laboratory 14
   Transfer timing: when a line connection is established under a state where any order images wait to be transferred Processing priority: order information transfer>order image transfer

Another specific example of the system form where transfer is performed via the center server 64 like in the order processing system 60 shown in FIG. 8 will be described. In this example, the ordering terminal (such as a customer's PC) 62 that is an apparatus at an ordering place transfers an order to the center server 64 via a Web service and the center server 64 transfers order information and an order image to the photo laboratory 14. In this system form, a Web service is provided and a Web page functions as a GUI. This example can take a form where the ordering terminal 62 is for example a customer's PC and the customer's PC has access to the center server 64 (Web page) through the communication means 16 such as the Internet to display on the display unit 65 an order creation screen, order information input screen or the like (Web page) for example by a browser so that order information corresponding to an order image is inputted using the displayed GUI to create order data containing the order image and order information related to each other.

In this example, the selection of an order image and the uploading of the image to the center server 64 are performed using a customer's PC that is the ordering terminal 62. That is, the order image is selected from among images stored in, for instance, a local drive (such as an HDD or a removable medium) and is uploaded to the center server 64 using the customer's PC.

The input of order information is performed from the customer's PC (62) to the center server 64 and order contents (such as a size and the number of copies to be made) are collectively or individually set for the uploaded order image. In addition, reception method and means are set in the order information and customer's information is further set as necessary.

The order information inputted in this manner is transferred from the center server 64 to the photo laboratory 14. At this time, the order information is accumulated so as to be waiting to be transferred and is transferred to the photo laboratory 14 using the communication means (such as the Internet) 16. In this example, like in the above example, it is preferable that even when an order image of a preceding order is currently transferred, order information of a succeeding order is transferred without waiting for the order image transfer to be completed by interrupting the order image transfer. Note that in this example, the order information may be downloaded in response to an action taken on the photo laboratory 14 side.

The order image uploaded from the ordering terminal (customer's PC) 62 and accumulated in the center server 64 is transferred to the photo laboratory 14 in units of orders (print orders) in parallel with the order information transfer. The order image may be downloaded from the center server 64 in response to an action taken on the photo laboratory 14 side.

The first transfer means and the second transfer means in the system form of this example are summarized below.
(First transfer means)
   Transfer data: order information
   Transfer unit: order-by-order
   Transfer route: from the center server 64 to the photo laboratory 14
   Transfer timing: immediately after order information is inputted and accumulated or immediately after a line connection is established under a state where any order information waits to be transferred
   Processing priority: image selection and uploading/order information input>order information transfer>order image transfer
(Second transfer means)
   Transfer data: order image
   Transfer unit: order-by-order
   Transfer route: from the center server 64 to the photo laboratory 14
   Transfer timing: when a line connection is established under a state where any order images wait to be transferred
   Processing priority: image selection and uploading/order information input>order information transfer>order image transfer

The digital order processing system according to the present invention has been described in detail above based on various embodiments and examples, although the present invention is not limited to the embodiments and examples described above and it is of course possible to make various modifications and changes without departing from the gist of the present invention.

According to the present invention, it becomes possible to make a production plan in advance with reference to the contents of customers' orders or in particular to plan the timings of paper width switching of a printer, the timings of throwing of the order processing apparatus into production, and the like and to produce digital photo prints based on the production plan. In particular, according to the present invention, it becomes possible to predict the contents (such as the numbers of copies to be made, the sizes, the priorities, and the image kinds) and the arrival times of the orders. As a result, it becomes possible to make a production plan where consideration is given to the characteristics (such as the capacity, the supported paper width, and the finishing type) of the production facility, the printing paper (photographic paper) remaining amounts, paper width switching timings, and the like, which provides a remarkable effect that it is possible to perform efficient production of digital photo prints based on the production plan.

Also, according to the present invention, customer's order information is transferred to a photo processing laboratory prior to its corresponding customer's order image, so that it becomes possible to predict the arrival time of an order (order image) at the photo processing laboratory, which makes it possible to detect an abnormality when the order does not arrive even if the current time has reached the predicted time. For instance, in a system form where order information is transferred using a communication means, when an order image corresponding to the order information received in advance does not arrive even if the current time has reached a predetermined time (or a predicted time), an abnormality is automatically detected/displayed on a system side of the photo processing laboratory. Also, in a system form where order information is transferred using a medium, when an order image corresponding to the order information is not inputted even if the current time has reached a predetermined time, an abnormality is automatically detected/displayed on the system side of the photo processing laboratory. According to the present invention, when an agency receives no order, the agency can also transfer to the photo processing laboratory a message that no order is received.

As a result, according to the present invention, it becomes possible to solve a problem of the conventional technique that it is impossible to detect an abnormality before an inquiry is received from a customer and to detect and cope with the abnormality in advance. That is, it becomes possible to give a timely warning about a trouble over an order and to take swift measures against the trouble at the photo processing laboratory. In addition, it also becomes possible to explain the customer about the occurrence of the abnormality and the measures taken against it, which makes it possible to improve customer service.

Also, according to the present invention, when customer's order information is transferred using a communication system and its corresponding customer's order image is transferred through delivery of a medium storing the order image, if there exist any agencies or the like where no orders were received, no order information is transferred from the agencies, so that it becomes possible to judge that the agencies received no orders and to exclude the agencies from the target of a media collection service or the like, thereby increasing the efficiency of collection work.

Further, according to the present invention, it is possible to grasp in advance the properties (such as a reduced image like a thumbnail image) of an order image to be received at the photo processing laboratory, so that it becomes possible to automatically produce an appropriate photo print that is comparable to a manual level by reflecting results of image inspection and correction trial performed using the reduced image (image property) received in advance in a production plan.

## Claims

1. A digital photo order processing system in which a photo processing laboratory receives at least one order image and order information of a customer having been related to each other and creates at least one photo print of said at least one order image in accordance with said order information, comprising:
first transfer means; and
second transfer means, wherein:
said order information of the customer is preferentially by said first transfer means to said photo processing laboratory prior to transfer of said at least one order image;
said at least one order image corresponding to the order information is transferred by said second transfer means to said photo processing laboratory after the transfer of the order information is finished; and
at said photo processing laboratory, a production plan of photo print processing is prepared based on the order information transferred by said first transfer means and said at least one photo print of said at least one order image transferred by said second transfer means is created in accordance with the prepared production plan.

2. The digital photo order processing system according to claim 1, wherein:
before said order information of the customer is transferred by said first transfer means, said order information of the customer is inputted; and
before said transfer of said at least one order image of the customer by said second transfer means, said at least one order image of the customer is inputted.

3. The digital photo order processing system according to claim 1 or 2, wherein:
before said at least one photo print of said at least one order image is created in accordance with the production plan, it is confirmed whether said at least one order image of the customer corresponding to the preferentially transferred order information has been transferred to said photo processing laboratory; and
if said at least one order image is not yet transferred, it is waited for said at least one order image to be transferred and, after it is confirmed that said at least one order image has been transferred, said at least one photo print of said at least one order image is created.

4. The digital photo order processing system according to any one of claims 1 to 3, wherein at said photo processing laboratory, after said at least one photo print of said at least one order image is created, said at least one created photo print is handed over to the customer or a person designated by the customer.

5. The digital photo order processing system according to any one of claims 1 to 4, wherein the order information contains at least order's information, an order date and time or a delivery date and time, a print size, a number of prints to be made, a finishing type, a type of photo product and a print reception method, and further contains an attribute of said at least one order image as optional information.

6. The digital photo order processing system according to any one of claims 1 to 5, wherein when plural orders have been received and order information of a succeeding order is inputted during transfer of at least one order image of a preceding order by said second transfer means, said first transfer means allows said second transfer means to suspend temporarily the transfer of said at least one order image of the preceding order through an interruption and preferentially transfers the order information of the succeeding order to said photo processing laboratory.

7. The digital photo order processing system according to claim 6,
wherein, during transfer of the order information of the succeeding order by said first transfer means through the interruption, the first transfer means allows said second transfer means to interrupt temporarily the transfer of said at least one order image of the preceding order and said second transfer means that temporarily interrupts the transfer resumes the transfer of said at least one order image of the preceding order after the transfer of the order information of the succeeding order by said first transfer means is finished, or
wherein, during the transfer of the order information of the succeeding order by said first transfer means through the interruption, the second transfer means transfers said at least one order image of the preceding order in parallel or by background processing.

8. The digital photo order processing system according to any one of claims 1 to 7, wherein said first transfer means and said second transfer means respectively transmit the order information and said at least one order image of the customer to said photo processing laboratory as digital data.

9. The digital photo order processing system according to any one of claims 1 to 5, wherein:
said first transfer means transmits the order information of the customer to said photo processing laboratory as digital data; and
said second transfer means delivers a digital image recording medium in which said at least one order image of the customer has been recorded to said photo processing laboratory.

10. The digital photo order processing system according to any one of claims 1 to 5, wherein said first transfer means and said second transfer means deliver a digital image recording medium in which both of the order information and said at least one order image of the customer have been recorded, or digital image recording media in each of which one of the order information and said at least one order image has been recorded, to said photo processing laboratory.

11. A digital photo order processing system, comprising:
means for inputting at least one order image and order information of a customer ordering at least one photo print, wherein said at least one order image and the order information are related to each other;
first transfer means for preferentially transferring the inputted order information of the customer to a photo processing laboratory prior to transfer of said at least one order image corresponding to the order information;
second transfer means for, after the transfer of the order information of the customer is finished, transferring said at least one order image of the customer corresponding to the order information to said photo processing laboratory;
planning means which is provided for said photo processing laboratory and which makes an efficient production plan of photo print processing with reference to the order information transferred by said first transfer means; and
photo print processing means which is provided for said photo processing laboratory and which performs the photo print processing of the order image corresponding to the order information of the customer and transferred by said second transfer means in accordance with the production plan to create at least one photo print of said at least one order image of the customer.

12. The digital photo order processing system according to claim 11, further comprising:
image detection means which is provided for said photo processing laboratory and which confirms whether said at least one order image corresponding to the order information with reference to which the production plan has been made, has arrived at said photo processing laboratory, waits for said at least one order image if said at least one order image does not yet arrive at said photo processing laboratory, and detects said at least one order image of the customer that has arrived at said photo processing laboratory,
wherein said photo print processing means performs the photo print processing of said at least one order image of the customer detected by said image detection means in accordance with the production plan.

13. The digital photo order processing system according to claim 11 or 12, further comprising handover means which is provided for said photo processing laboratory and which hands over said at least one photo print of said at least one order image of the customer created by said photo print processing means to the customer or a person designated by the customer.

14. The digital photo order processing system according to claim 13, wherein the handover means is one of delivery means for delivering said at least one photo print to the customer or the person designated by the customer and delivery means for handing said at least one photo print to the customer or the person designated by the customer at a counter of said photo processing laboratory.

15. The digital photo order processing system according to any one of claims 11 to 14, wherein the order information contains at least order's information, an order date and time or a delivery date and time, a print size, a number of prints to be made, a finishing type, a type of print product and a print reception method, and further contains an attribute of said at least one order image as optional information.

16. The digital photo order processing system according to any one of claims 11 to 15, wherein when plural orders have been received and order information of a succeeding order is inputted during transfer of at least one order image of a preceding order by said second transfer means, said first transfer means allows said second transfer means to suspend temporarily the transfer of said at least one order image of the preceding order through an interruption and preferentially transfers the order information of the succeeding order to said photo processing laboratory.

17. The digital photo order processing system according to claim 16,
wherein, during transfer of the order information of the succeeding order by said first transfer means through the interruption, the first transfer means allows said second transfer means to interrupt temporarily the transfer of said at least one order image of the preceding order and said second transfer means that temporarily interrupts the transfer resumes the transfer of said at least one order image of the preceding order after the transfer of the order information of the succeeding order by said first transfer means is finished, or
wherein, during the transfer of the order information of the succeeding order by said first transfer means through the interruption, the second transfer means transfers said at least one order image of the preceding order in parallel or by background processing.

18. The digital photo order processing system according to any one of claims 11 to 17, wherein each of said first transfer means and said second transfer means comprises communication means for respectively transmitting the order information and said at least one order image of the customer to said photo processing laboratory as digital data.

19. The digital photo order processing system according to any one of claims 11 to 15, wherein:
said first transfer means comprises communication means for transmitting the order information of the customer to said photo processing laboratory as digital data; and
said second transfer means comprises delivery means for delivering a digital image recording medium in which said at least one order image of the customer has been recorded to said photo processing laboratory.

20. The digital photo order processing system according to any one of claims 11 to 15, wherein each of said first transfer means and said second transfer means comprises delivery means for delivering a digital image recording medium in which both of the order information and said at least one order image of the customer have been recorded, or digital image recording media in each of which one of the order information and said at least one order image has been recorded, to said photo processing laboratory.
